# EUROPÄISCHE PATENTSCHRIFT

(11) **EP 4 070 446 B1**
(45) Veröffentlichungstag und Bekanntmachung des Hinweises auf die Patenterteilung: **25.03.2026**
(21) Anmeldenummer: 20808338.6
(22) Anmeldetag: 17.11.2020
(51) Int. Cl.: H02P 3/18, H02P 6/24, H02P 21/36, B60L 7/14

(54) **VERFAHREN ZUM BETREIBEN EINES KRAFTFAHRZEUGS, VORRICHTUNG FÜR EIN KRAFTFAHRZEUG, KRAFTFAHRZEUG**
METHOD FOR OPERATING A MOTOR VEHICLE, DEVICE FOR A MOTOR VEHICLE, MOTOR VEHICLE
PROCÉDÉ POUR FAIRE FONCTIONNER UN VÉHICULE AUTOMOBILE, DISPOSITIF POUR UN VÉHICULE AUTOMOBILE ET VÉHICULE AUTOMOBILE

(30) Priorität: 06.12.2019 DE 102019219022
(43) Veröffentlichungstag der Anmeldung: 12.10.2022
(73) Patentinhaber: Robert Bosch GmbH, 70442 Stuttgart (DE)
(72) Erfinder: FRIEDRICH, Thomas, 74379 Ingersheim (DE); FEUERSTACK, Peter, 71642 Ludwigsburg (DE); FRANK, Felix, 97737 Gemuenden Am Main (DE)
(86) Internationale Anmeldenummer: PCT/EP2020/082325
(87) Internationale Veröffentlichungsnummer: WO 2021/110401

(56) Entgegenhaltungen:
- CN-A- 102 457 182
- DE-A1- 102016 207 280
- JP-A- 2012 060 710
- US-A1- 2015 239 350

## Beschreibung

Die Erfindung betrifft ein Verfahren zum Betreiben eines Kraftfahrzeugs, das eine zumindest drei Phasen aufweisende elektrische Maschine, einen elektrischen Energiespeicher und eine mehrere Schaltelemente aufweisende Leistungselektronik aufweist, wobei die Schaltelemente der Leistungselektronik zum elektrischen Verbinden der Phasen mit dem Energiespeicher zur Erzeugung eines generatorischen Verzögerungsmoments angesteuert werden.

Außerdem betrifft die Erfindung eine Vorrichtung, mit einem Steuergerät.

Ferner betrifft die Erfindung ein Kraftfahrzeug mit einer derartigen Vorrichtung.

### Stand der Technik

Die Druckschriften CN 102 457 182 A, JP 2012 060710 A, US 2015/239350 A1 und DE 10 2016 207280 A1 offenbaren Verfahren und Vorrichtungen zum Betreiben eines Kraftfahrzeugs. Verfahren und Kraftfahrzeuge der eingangs genannten Art sind aus dem Stand der Technik bekannt. Kraftfahrzeuge weisen beispielsweise als Antriebsmaschine vermehrt zumindest eine elektrische Maschine auf. Die elektrische Maschine weist in der Regel einen Stator mit zumindest drei Phasen auf. Die Phasen sind derart um einen Rotor der elektrischen Maschine verteilt angeordnet, dass der Rotor durch eine geeignete Bestromung der Phasen antreibbar beziehungsweise drehbar ist. Um eine gezielte Bestromung der Phasen zu erreichen, ist eine Leistungselektronik mit mehreren Schaltelementen vorgesehen, wobei die Phasen durch die Leistungselektronik mit einem elektrischen Energiespeicher des Kraftfahrzeugs verbunden/verbindbar sind. Beispielsweise weist die Leistungselektronik für jede der Phasen jeweils eine Halbbrücke mit zwei Schaltelementen auf.

Wird die elektrische Maschine generatorisch betrieben, so werden durch die Drehung des Rotors elektrische Wechselspannungen in die Phasen induziert und es wird ein generatorisches Verzögerungsmoment erzeugt. Dabei werden die Schaltelemente der Leistungselektronik zum elektrischen Verbinden der Phasen mit dem Energiespeicher zur Erzeugung des generatorischen Verzögerungsmomentes angesteuert.

### Offenbarung der Erfindung

Das erfindungsgemäße Verfahren mit den Merkmalen des Anspruchs 1 hat den Vorteil, dass situativ eine besonders geeignete Ansteuerung der Schaltelemente der Leistungselektronik verwirklicht werden kann. Erfindungsgemäß ist hierzu vorgesehen, dass eine Fahrsituation des Kraftfahrzeugs ermittelt wird, wobei in Abhängigkeit von der ermittelten Fahrsituation ein Ansteuerverfahren aus einer Gruppe von zumindest zwei möglichen Ansteuerverfahren ausgewählt wird, und wobei die Schaltelemente in Abhängigkeit von dem ausgewählten Ansteuerverfahren angesteuert werden. Je nachdem, welches Ansteuerverfahren ausgewählt wird, werden die Schaltelemente durch unterschiedliche Ansteuersignale angesteuert. Beispielsweise werden die Schaltelemente bei Auswahl eines ersten der Ansteuerverfahren durch andere Ansteuersignale angesteuert, als wenn ein zweites der Ansteuerverfahren ausgewählt werden würde. Weil sich die Ansteuersignale voneinander unterscheiden, wird der generatorische Betrieb der elektrischen Maschine durch die Auswahl des Ansteuerverfahrens jeweils unterschiedlich beeinflusst. Es wird dabei davon ausgegangen, dass je nach Fahrsituation des Kraftfahrzeugs ein anderes der Ansteuerverfahren besonders geeignet ist. Bei den Ansteuerverfahren handelt es sich vorzugsweise um vorab bestimmte beziehungsweise festgelegte Ansteuerverfahren. Dabei existiert für jedes der möglichen Ansteuerverfahren zumindest eine Fahrsituation des Kraftfahrzeugs, in der das jeweilige Ansteuerverfahren ausgewählt werden würde. Vorzugsweise werden die Ansteuersignale zur Ansteuerung der Schaltelemente in Abhängigkeit von dem ausgewählten Ansteuerverfahren, einer Drehzahl des Rotors und/oder einem Rotorlagewinkel des Rotors ermittelt.

Gemäß der Erfindung ist vorgesehen, dass als Ansteuerverfahren ein Blocktaktungsverfahren ausgewählt wird. Blocktaktungsverfahren sind grundsätzlich bekannt und werden auch als Six Step Mode oder Fundamental Frequency Clocking (FFC) bezeichnet. Wird das Blocktaktungsverfahren ausgewählt, so werden die angesteuerten Schaltelemente während jeder Umdrehung des Rotors jeweils einmal leitend und einmal nichtleitend geschaltet. Dabei werden die angesteuerten Schaltelemente zeitlich versetzt zueinander geschaltet. Die Zeitdauer, in der die angesteuerten Schaltelemente leitend sind, entspricht dabei der Zeitdauer, in der die angesteuerten Schaltelemente nicht leitend sind. Werden die Schaltelemente in Abhängigkeit von dem Blocktaktungsverfahren angesteuert, so wird ein besonders hohes generatorisches Verzögerungsmoment erzeugt, sodass das Kraftfahrzeug schnell verzögert wird.

Erfindungsgemäß wird das Blocktaktungsverfahren ausgewählt, wenn als Fahrsituation eine Notbremssituation ermittelt wird. Unter einer Notbremssituation ist eine Fahrsituation zu verstehen, in der eine möglichst schnelle, insbesondere schnellstmögliche, Verzögerung des Kraftfahrzeugs gewünscht ist. Weil durch das Blocktaktungsverfahren ein hohes generatorisches Verzögerungsmoment erzeugt wird, ist das Blocktaktungsverfahren als Ansteuerverfahren besonders geeignet, wenn die Notbremssituation ermittelt wird. Vorzugsweise wird bei Ermitteln der Notbremssituation auch zumindest eine Reibbremseinrichtung des Kraftfahrzeugs zum Erzeugen eines Reibbremsmoments angesteuert.

Gemäß einer bevorzugten Ausführungsform ist vorgesehen, dass als Ansteuerverfahren ein Raumzeiger-Pulsweitenmodulations-Verfahren ausgewählt wird. Auch Raumzeiger-Pulsweitenmodulations-Verfahren sind grundsätzlich bekannt und werden auch als Space Vector Puls Width Modulation (SVPWM) bezeichnet. Bei dem Raumzeiger-Pulsweitenmodulations-Verfahren werden die angesteuerten Schaltelemente pulsweitenmoduliert angesteuert. Der Tastgrad der pulsweitenmodulierten Ansteuerung korrespondiert dabei mit dem Rotorlagewinkel des Rotors. Durch die Verwendung des Raumzeiger-Pulsweitenmodulations-Verfahrens ist verglichen mit dem Blocktaktungsverfahren eine gesteigerte Rekuperationseffizienz erreichbar. Der Wirkungsgrad der Umwandlung von Bewegungsenergie des Kraftfahrzeugs in elektrische Energie ist demnach größer.

Vorzugsweise wird ein Raumzeiger-Pulsweitenmodulations-Verfahren, das eine hohe Rekuperationseffizienz bewirkt, ausgewählt, wenn als Fahrsituation eine Standard-Fahrsituation ermittelt wird. Von einer Standard-Fahrsituation ist beispielsweise auszugehen, wenn als Verzögerung eine Komfortverzögerung durchgeführt werden soll. Die hohe Rekuperationseffizienz wird dabei beispielsweise durch eine geeignete Vorgabe eines Soll-Wertes für einen drehmomentbildenden Strom und eines Soll-Wertes für einen flussbildenden Strom erreicht. Der drehmomentbildende Strom und der flussbildende Strom werden regelmäßig auch als Iq beziehungsweise Id bezeichnet. Durch den drehmomentbildenden Strom und den flussbildenden Strom wird in der feldorientierten Regelung von elektrischen Maschinen der Raumzeiger beschrieben.

Gemäß einer bevorzugten Ausführungsform ist vorgesehen, dass ein Raumzeiger-Pulsweitenmodulations-Verfahren, das eine geringere Rekuperationseffizienz bewirkt, ausgewählt wird, wenn als Fahrsituation eine Bergabfahrt und/oder eine Fahrt bei zumindest im Wesentlichen geladenen Energiespeicher ermittelt wird. Es wird dabei davon ausgegangen, dass ein Ladezustand des Energiespeichers einen vorgegebenen Maximalladungs-Schwellenwert nicht überschreiten soll. Ein Überschreiten des Maximalladungs-Schwellenwertes kann beispielsweise auftreten, wenn die elektrische Maschine bei einer längeren Bergabfahrt und/oder bei bereits zumindest im Wesentlichen geladen Energiespeicher generatorisch betrieben wird. Durch das Auswählen des Raumzeiger-Pulsweitenmodulations-Verfahrens mit der geringen Rekuperationseffizienz wird das Überschreiten des Maximalladungs-Schwellenwertes vermieden. Auch die geringe Rekuperationseffizienz wird vorzugsweise durch eine geeignete Vorgabe des Soll-Wertes für den drehmomentbildenden Strom und des Soll-Wertes für den flussbildenden Strom erreicht. Dabei werden in dem Raumzeiger-Pulsweitenmodulations-Verfahren, das die hohe Rekuperationseffizienz bewirkt, andere Soll-Werte vorgegeben als in dem Raumzeiger-Pulsweitenmodulations-Verfahren, das die geringere Rekuperationseffizienz bewirkt.

Vorzugsweise wird zum Ermitteln der Fahrsituation eine Lösegeschwindigkeit eines Stellelements, durch das ein Beschleunigungsmoment für das Kraftfahrzeug vorgebbar ist, überwacht. Beispielsweise wird festgestellt, dass die Notbremssituation vorliegt, wenn die Lösegeschwindigkeit einen vorgegebenen Lösegeschwindigkeits-Schwellenwert übersteigt. Unterschreitet die Lösegeschwindigkeit den vorgegebenen Lösegeschwindigkeits-Schwellenwert, so wird insbesondere die Standard-Situation als Fahrsituation ermittelt.

Vorzugsweise wird zum Ermitteln der Fahrsituation eine Betätigungsgeschwindigkeit und/oder eine Betätigungskraft eines Stellelementes, durch das das Verzögerungsmoment für das Kraftfahrzeug vorgebbar ist, überwacht. Möchte ein Benutzer des Kraftfahrzeugs eine Notbremsung einleiten, so ist davon auszugehen, dass er das Stellelement besonders schnell und besonders stark betätigen wird. Durch das Überwachen der Betätigungskraft und/oder der Betätigungsgeschwindigkeit ist deshalb zuverlässig feststellbar, ob als Fahrsituation die Notbremssituation vorliegt oder nicht.

Vorzugsweise wird die Fahrsituation in Abhängigkeit von mittels einer Umfeldsensorik des Kraftfahrzeugs erfassten Daten ermittelt. Vorzugsweise werden durch die Umfeldsensorik visuelle Daten im Umfeld des Kraftfahrzeugs erfasst. In Abhängigkeit von den mittels der Umfeldsensorik erfassten Daten ist beispielsweise feststellbar, ob die Notbremssituation vorliegt oder nicht. Beispielsweise wird ermittelt, dass die Notbremssituation vorliegt, wenn mittels der Umfeldsensorik festgestellt wird, dass ein Abstand des Kraftfahrzeugs zu einem weiteren Fahrzeug oder einem Gegenstand im Umfeld des Kraftfahrzeugs einen vorgegebenen Abstands-Schwellenwert unterschreitet.

Vorzugsweise wird zum Ermitteln der Fahrsituation ein Ladezustand des Energiespeichers überwacht. Hierdurch kann festgestellt werden, ob als Fahrsituation die Fahrt bei zumindest im Wesentlichen geladenen Energiespeicher vorliegt oder nicht.

Vorzugsweise wird zum Ermitteln der Fahrsituation ein Gefälle einer Straße, auf der das Kraftfahrzeug fährt, überwacht. Hierdurch kann festgestellt werden, ob als Fahrsituation die Bergabfahrt vorliegt oder nicht. Vorzugsweise wird das Gefälle mittels einer Sensoreinrichtung des Kraftfahrzeugs erfasst. Bei der Sensoreinrichtung handelt es sich dann beispielsweise um einen Drehratensensor. Alternativ oder zusätzlich wird eine Position des Kraftfahrzeugs in Abhängigkeit von mittels einer Navigationseinheit des Kraftfahrzeugs erfassten Navigationssatellitensignalen ermittelt. Zum Ermitteln des Gefälles wird dann die ermittelte Position mit einer Karte abgeglichen, in der für verschiedene mögliche Positionen jeweils eine Steigung oder ein Gefälle abgespeichert ist.

Die erfindungsgemäße Vorrichtung für ein Kraftfahrzeug, das eine zumindest drei Phasen aufweisende elektrische Maschine, einen elektrischen Energiespeicher und eine mehrere Schaltelemente aufweisende Leistungselektronik aufweist, wobei die Phasen der elektrischen Maschine durch die Leistungselektronik mit dem Energiespeicher elektrisch verbunden/verbindbar sind, zeichnet sich mit den Merkmalen des Anspruchs 10 durch ein Steuergerät aus, das speziell dazu hergerichtet ist, bei bestimmungsgemäßem Gebrauch das erfindungsgemäße Verfahren durchzuführen. Auch daraus ergeben sich die bereits genannten Vorteile. Weitere bevorzugte Merkmale und Merkmalskombinationen ergeben sich aus dem zuvor Beschriebenen sowie aus den Ansprüchen. Vorzugsweise weist die Vorrichtung zumindest eine Sensoreinrichtung auf, die kommunikationstechnisch mit dem Steuergerät verbunden und dazu ausgebildet ist, Daten zu erfassen, die mit der Fahrsituation des Kraftfahrzeugs korrelieren. Das Steuergerät ist dann dazu ausgebildet, die Fahrsituation in Abhängigkeit von den erfassten Daten zu ermitteln.

Das erfindungsgemäße Kraftfahrzeug weist eine zumindest drei Phasen aufweisende elektrische Maschine, einen elektrischen Energiespeicher und eine mehrere Schaltelemente aufweisende Leistungselektronik auf, wobei die Phasen der elektrischen Maschine durch die Leistungselektronik mit dem Energiespeicher elektrisch verbunden/verbindbar sind, und zeichnet sich mit den Merkmalen des Anspruchs 11 durch die erfindungsgemäße Vorrichtung aus.

Auch daraus ergeben sich die bereits genannten Vorteile. Weitere bevorzugte Merkmale und Merkmalskombinationen ergeben sich aus dem zuvor Beschriebenen sowie aus den Ansprüchen.

Im Folgenden wird die Erfindung anhand der Zeichnungen näher beschrieben. Dazu zeigen
- Figur 1: ein Kraftfahrzeug in einer vereinfachten Darstellung und
- Figur 2: ein Verfahren zum Betreiben des Kraftfahrzeugs.

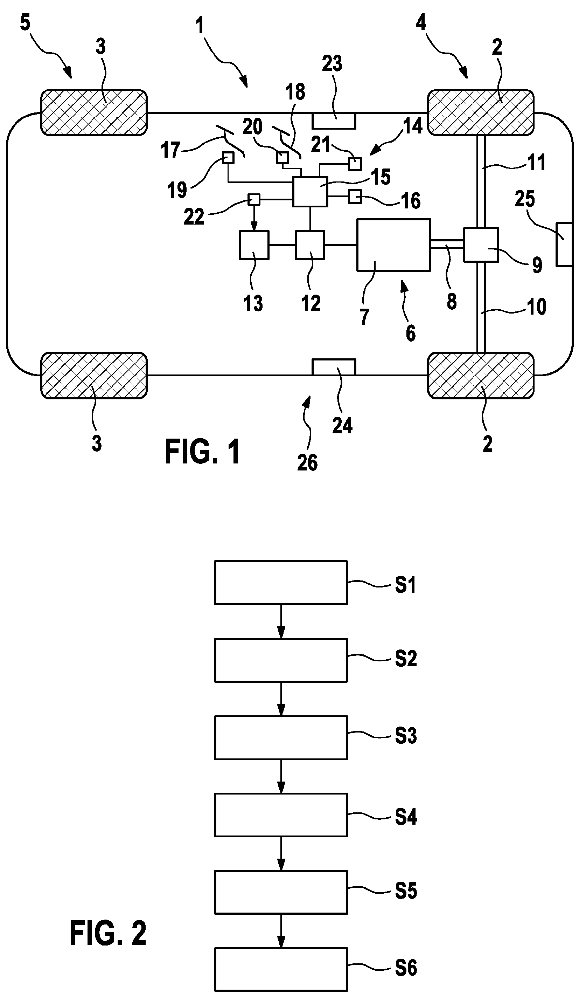

Figur 1 zeigt in einer vereinfachten Darstellung ein Kraftfahrzeug 1. Das Kraftfahrzeug 1 weist vier Räder 2 und 3 auf, wobei die Räder 2 einer Vorderradachse 4 und die Räder 3 einer Hinterradachse 5 zugeordnet sind. Das Kraftfahrzeug 1 weist eine Antriebsanordnung 6 mit einer elektrischen Antriebsmaschine 7 auf.

Die Antriebsmaschine 7 weist einen nicht dargestellten Rotor auf, der drehfest auf einer Antriebswelle 8 des Kraftfahrzeugs 1 angeordnet ist. Die Antriebswelle 8 ist vorliegend durch ein Differentialgetriebe 9 und Wellen 10 und 11 drehfest mit den Rädern 2 der Vorderradachse 4 verbunden. Die Antriebsmaschine 7 weist außerdem einen nicht dargestellten Stator mit drei Phasen auf. Die Phasen sind derart verteilt um den Rotor angeordnet, dass der Rotor durch eine geeignete Bestromung der Phasen antreibbar beziehungsweise drehbar ist.

Um eine gezielte Bestromung der Phasen zu erreichen, weist das Kraftfahrzeug 1 eine Leistungselektronik 12 auf. Die Phasen der Antriebsmaschine 7 sind durch die Leistungselektronik 12 mit einem elektrischen Energiespeicher 13 des Kraftfahrzeugs 1 verbunden/verbindbar. Die Leistungselektronik 12 weist hierzu für jede der Phasen der Antriebsmaschine 7 jeweils eine Halbbrücke mit zwei Schaltelementen auf.

Die Antriebsmaschine 7 ist generatorisch betreibbar. Wird die Antriebsmaschine 7 generatorisch betrieben, so wird durch den drehenden Rotor eine elektrische Wechselspannung in die Phasen induziert und es wird ein das Kraftfahrzeug 1 verzögerndes generatorisches Verzögerungsmoment erzeugt. Durch eine geeignete Ansteuerung der Schaltelemente der Leistungselektronik 12 kann die induzierte Wechselspannung in eine Gleichspannung zum Laden des Energiespeichers 13 gerichtet werden.

Das Kraftfahrzeug 1 weist außerdem eine Vorrichtung 14 auf. Die Vorrichtung 14 weist ein Steuergerät 15 auf, das dazu ausgebildet ist, die Schaltelemente der Leistungselektronik 12 anzusteuern.

Die Vorrichtung 14 weist außerdem einen Datenspeicher 16 auf, in dem unterschiedliche Ansteuerverfahren abgespeichert sind. Der Datenspeicher 16 ist kommunikationstechnisch mit dem Steuergerät 15 verbunden, um dem Steuergerät 15 eines oder mehrere der Ansteuerverfahren bereitzustellen.

Das Kraftfahrzeug 1 weist außerdem ein erstes Stellelement 17 auf, wobei durch eine Betätigung des ersten Stellelements 17 ein Beschleunigungsmoment für das Kraftfahrzeug 1 vorgebbar ist. Bei dem ersten Stellelement 17 handelt es sich demnach um ein Gaspedal 17 des Kraftfahrzeugs 1. Um das vorgegebene Beschleunigungsmoment zu erzeugen, steuert das Steuergerät 15 die Schaltelemente der Leistungselektronik 12 derart an, dass die Phasen bestromt werden, um den Rotor durch die Bestromung der Phasen anzutreiben.

Das Kraftfahrzeug 1 weist außerdem ein zweites Stellelement 18 auf, durch das ein Verzögerungsmoment für das Kraftfahrzeug 1 vorgebbar ist. Bei dem zweiten Stellelement 18 handelt es sich demnach um ein Bremspedal 18 des Kraftfahrzeugs 1. Um das vorgegebene Verzögerungsmoment zu erzeugen, steuert das Steuergerät 15 die Schaltelemente der Leistungselektronik 12 an, um das Verzögerungsmoment durch generatorisches Betreiben der Antriebsmaschine 7 zu erzeugen. Alternativ dazu wird vorzugsweise zumindest eine nicht dargestellte Reibbremseinrichtung angesteuert, um das Verzögerungsmoment zu erzeugen oder es werden sowohl die Leistungselektronik 12 als auch die zumindest eine Reibbremseinrichtung angesteuert, sodass die zumindest eine Reibbremseinrichtung und die Antriebsmaschine 7 das Verzögerungsmoment gemeinsam erzeugen.

Die Vorrichtung 14 weist außerdem mehrere Sensoreinrichtungen 19, 20, 21, 22, 23, 24 und 25 auf.

Eine erste 19 der Sensoreinrichtungen ist dazu ausgebildet, eine Geschwindigkeit einer Verlagerung des ersten Stellelementes 17 zu erfassen. Die erste Sensoreinrichtung 19 ist kommunikationstechnisch mit dem Steuergerät 15 verbunden, um dem Steuergerät 15 die erfasste Geschwindigkeit der Verlagerung des Stellelements 17 bereitzustellen.

Eine zweite 20 der Sensoreinrichtungen ist dazu ausgebildet, eine Geschwindigkeit einer Verlagerung des zweiten Stellelements 18 zu erfassen. Die zweite Sensoreinrichtung 20 ist kommunikationstechnisch mit dem Steuergerät 15 verbunden, um dem Steuergerät 15 die erfasste Geschwindigkeit der Verlagerung des zweiten Stellelements 18 bereitzustellen. Alternativ oder zusätzlich ist die zweite Sensoreinrichtung 20 dazu ausgebildet, eine Betätigungskraft des zweiten Stellelements 18 zu erfassen und dem Steuergerät 15 bereitzustellen.

Eine dritte 21 der Sensoreinrichtungen ist dazu ausgebildet, ein Gefälle einer Straße, auf der das Kraftfahrzeug 1 fährt, zu erfassen. Beispielsweise handelt es sich bei der dritten Sensoreinrichtung 21 um einen Drehratensensor 21. Die dritte Sensoreinrichtung 21 ist kommunikationstechnisch mit dem Steuergerät 15 verbunden, um dem Steuergerät 15 das erfasste Gefälle bereitzustellen.

Eine vierte 22 der Sensoreinrichtungen ist dazu ausgebildet, einen Ladezustand des Energiespeichers 13 zu überwachen. Die vierte Sensoreinrichtung 22 ist kommunikationstechnisch mit dem Steuergerät 15 verbunden, um dem Steuergerät 15 den erfassten Ladezustand bereitzustellen.

Bei einer fünften 23, einer sechsten 24 und einer siebten 25 der Sensoreinrichtungen handelt es sich jeweils um einen Umfeldsensor 23, 24, 25 des Kraftfahrzeugs 1. Die Umfeldsensoren 23, 24 und 25 bilden gemeinsam eine Umfeldsensorik 26 des Kraftfahrzeugs 1 und sind dazu ausgebildet, ein Umfeld des Kraftfahrzeugs 1 zu erfassen. Bei den Umfeldsensoren 23, 24 und 25 handelt es sich beispielsweise um Radarsensoren, Lidarsensoren, Lasersensoren oder Kamerasensoren. Die Umfeldsensoren 23, 24 und 25 sind kommunikationstechnisch mit dem Steuergerät 15 verbunden, um dem Steuergerät 15 durch die Umfeldsensoren 23, 24 und 25 erfasste Umfelddaten bereitzustellen.

Im Folgenden wird mit Bezug auf Figur 2 ein vorteilhaftes Verfahren zum Betreiben des Kraftfahrzeugs 1 anhand eines Flussdiagramms näher erläutert.

In einem ersten Schritt S1 werden durch die Sensoreinrichtungen 19, 20, 21, 22, 23, 24 und 25 jeweils Daten erfasst und dem Steuergerät 15 bereitgestellt.

In einem zweiten Schritt S2 ermittelt das Steuergerät 15 in Abhängigkeit von den durch die Sensoreinrichtungen 19, 20, 21, 22, 23, 24 und 25 erfassten Daten eine Fahrsituation des Kraftfahrzeugs 1.

Beispielsweise ermittelt das Steuergerät 15 als Fahrsituation eine Notbremssituation, wenn die Geschwindigkeit der Verlagerung des ersten Stellelementes 17 in Richtung eines unbetätigten Zustands des ersten Stellelementes 17, also die Lösegeschwindigkeit des ersten Stellelementes 17, einen Lösegeschwindigkeits-Schwellenwert übersteigt. Das Steuergerät 15 ermittelt auch dann, dass die Notbremssituation vorliegt, wenn die Geschwindigkeit der Verlagerung des zweiten Stellelementes 18 in eine Betätigungsrichtung, also die Betätigungsgeschwindigkeit des zweiten Stellelementes 18, einen Betätigungsgeschwindigkeits-Schwellenwert übersteigt. Das Steuergerät 15 ermittelt auch dann, dass die Notbremssituation vorliegt, wenn anhand der durch die Umfeldsensorik 26 erfassten Daten beziehungsweise Umfelddaten ermittelt wird, dass ein Abstand zwischen dem Kraftfahrzeug 1 einerseits und einem weiteren Fahrzeug im Umfeld des Kraftfahrzeugs 1 und/oder einem Gegenstand im Umfeld des Kraftfahrzeugs 1 einen vorgegebenen Abstands-Schwellenwert unterschreitet.

Übersteigt das durch die dritte Sensoreinrichtung 21 erfasste Gefälle einen vorgegebenen Gefälle-Schwellenwert, so ermittelt das Steuergerät 15 als Fahrsituation eine Bergabfahrt. Übersteigt der durch die vierte Sensoreinrichtung 22 erfasste Ladezustand einen vorgegebenen Lade-Schwellenwert, so ermittelt das Steuergerät 15 als Fahrsituation eine Fahrt bei zumindest im Wesentlichen geladenen Energiespeicher 13.

Liegt weder die Notbremssituation, noch die Bergabfahrt, noch die Fahrt bei zumindest im Wesentlichen geladenen Energiespeicher 13 vor, so ermittelt das Steuergerät 15 in dem Schritt S2 als Fahrsituation eine Standard-Fahrsituation.

In einem dritten Schritt S3 wählt das Steuergerät 15 eines der in dem Datenspeicher 16 abgespeicherten Ansteuerverfahren in Abhängigkeit von der ermittelten Fahrsituation aus. Hat das Steuergerät 15 in dem Schritt S2 die Notbremssituation ermittelt, so wählt das Steuergerät 15 in dem Schritt S3 als Ansteuerverfahren ein Blocktaktungsverfahren aus. Hat das Steuergerät 15 in dem Schritt S2 die Bergabfahrt oder die Fahrt bei zumindest im Wesentlichen geladenen Energiespeicher 13 ermittelt, so wählt das Steuergerät 15 in dem Schritt S3 als Ansteuerverfahren ein Raumzeiger-Pulsweitenmodulations-Verfahren, das eine geringere Rekuperationseffizienz bewirkt, aus. Hat das Steuergerät 15 in dem Schritt S2 jedoch als Fahrsituation die Standard-Fahrsituation ermittelt, so wählt das Steuergerät 15 in dem Schritt S3 als Ansteuerverfahren ein Raumzeiger-Pulsweitenmodulations-Verfahren aus, das eine hohe Rekuperationseffizienz bewirkt.

In einem vierten Schritt S4 erfasst das Steuergerät 15, dass ein Verzögerungsmoment erzeugt werden soll, beispielsweise aufgrund einer Betätigung des zweiten Stellelementes 18.

In einem fünften Schritt S5 ermittelt das Steuergerät 15 Ansteuersignale zur Ansteuerung der Schaltelemente der Leistungselektronik 12. Das Steuergerät 15 ermittelt die Ansteuersignale zumindest in Abhängigkeit von dem ausgewählten Ansteuerverfahren. Vorzugsweise ermittelt das Steuergerät 15 die Ansteuersignale auch in Abhängigkeit von einer Drehzahl des Rotors und/oder einem Rotorlagewinkel des Rotors.

In einem sechsten Schritt S6 steuert dann das Steuergerät 15 die Schaltelemente der Leistungselektronik 12 mittels der ermittelten Ansteuersignale an, um die Antriebsmaschine 7 generatorisch zu betreiben und ein generatorisches Verzögerungsmoment zu erzeugen. Die Schaltelemente werden also in Abhängigkeit von dem ausgewählten Ansteuerverfahren angesteuert. Wurde in dem Schritt S2 als Fahrsituation die Notbremssituation ermittelt, so wird vorzugsweise zusätzlich zumindest eine der nicht dargestellten Reibbremseinrichtungen angesteuert. Es wird dann also sowohl ein generatorisches Verzögerungsmoment als auch ein Reibbremsmoment zum Verzögern des Kraftfahrzeugs 1 erzeugt.

## Patentansprüche

1. Verfahren zum Betreiben eines Kraftfahrzeugs, das eine zumindest drei Phasen aufweisende elektrische Maschine (7), einen elektrischen Energiespeicher (13) und eine mehrere Schaltelemente aufweisende Leistungselektronik (12) aufweist, wobei die Schaltelemente der Leistungselektronik (12) zum elektrischen Verbinden der Phasen mit dem Energiespeicher (13) zur Erzeugung eines generatorischen Verzögerungsmomentes angesteuert werden, **dadurch gekennzeichnet, dass** eine Fahrsituation des Kraftfahrzeugs (1) ermittelt wird, wobei in Abhängigkeit von der ermittelten Fahrsituation ein Ansteuerverfahren aus einer Gruppe von zumindest zwei möglichen Ansteuerverfahren ausgewählt wird, und wobei die Schaltelemente in Abhängigkeit von dem ausgewählten Ansteuerverfahren angesteuert werden,
wobei als Ansteuerverfahren ein Blocktaktungsverfahren ausgewählt wird, wenn als Fahrsituation eine Notbremssituation ermittelt wird.

2. Verfahren nach einem der vorhergehenden Ansprüche, **dadurch gekennzeichnet, dass** als Ansteuerverfahren ein Raumzeiger-Pulsweitenmodulations-Verfahren ausgewählt wird.

3. Verfahren nach Anspruch 2, **dadurch gekennzeichnet, dass** ein Raumzeiger-Pulsweitenmodulations-Verfahren, ausgewählt wird, wenn als Fahrsituation eine Standard-Fahrsituation ermittelt wird.

4. Verfahren nach einem der Ansprüche 2 und 3, **dadurch gekennzeichnet, dass** ein Raumzeiger-Pulsweitenmodulations-Verfahren, ausgewählt wird, wenn als Fahrsituation eine Bergabfahrt und/oder eine Fahrt bei zumindest im Wesentlichen geladenen Energiespeicher ermittelt wird.

5. Verfahren nach einem der vorhergehenden Ansprüche, **dadurch gekennzeichnet, dass** zum Ermitteln der Fahrsituation eine Lösegeschwindigkeit eines Stellelementes (17), durch das ein Beschleunigungsmoment für das Kraftfahrzeug (1) vorgebbar ist, überwacht wird.

6. Verfahren nach einem der vorhergehenden Ansprüche, **dadurch gekennzeichnet, dass** zum Ermitteln der Fahrsituation eine Betätigungsgeschwindigkeit und/oder eine Betätigungskraft eines Stellelementes (18), durch das das Verzögerungsmoment für das Kraftfahrzeug (1) vorgebbar ist, überwacht werden.

7. Verfahren nach einem der vorhergehenden Ansprüche, **dadurch gekennzeichnet, dass** die Fahrsituation in Abhängigkeit von mittels einer Umfeldsensorik (26) des Kraftfahrzeugs (1) erfassten Daten ermittelt wird.

8. Verfahren nach einem der vorhergehenden Ansprüche, **dadurch gekennzeichnet, dass** zum Ermitteln der Fahrsituation ein Ladezustand des Energiespeichers (13) überwacht wird.

9. Verfahren nach einem der vorhergehenden Ansprüche, **dadurch gekennzeichnet, dass** zum Ermitteln der Fahrsituation ein Gefälle einer Straße, auf der das Kraftfahrzeug (1) fährt, überwacht werden.

10. Vorrichtung für ein Kraftfahrzeug, das eine zumindest drei Phasen aufweisende elektrische Maschine (7), einen elektrischen Energiespeicher (13) und eine mehrere Schaltelemente aufweisende Leistungselektronik (12) aufweist, wobei die Phasen der elektrischen Maschine (7) durch die Leistungselektronik (12) mit dem Energiespeicher (13) elektrisch verbunden/verbindbar sind, **gekennzeichnet durch** ein Steuergerät (15), das speziell dazu hergerichtet ist, bei bestimmungsgemäßem Gebrauch das Verfahren gemäß einem der Ansprüche 1 bis 9 durchzuführen.

11. Kraftfahrzeug mit einer zumindest drei Phasen aufweisenden elektrischen Maschine (7), insbesondere Antriebsmaschine (7), einem elektrischen Energiespeicher (13) und einer mehrere Schaltelemente aufweisenden Leistungselektronik (12), wobei die Phasen der elektrischen Maschine (7) durch die Leistungselektronik (12) mit dem Energiespeicher (13) elektrisch verbunden/verbindbar sind, **gekennzeichnet durch** eine Vorrichtung (14) gemäß Anspruch 10.

## Claims

1. Method for operating a motor vehicle which comprises an electrical machine (7) having at least three phases, an electrical energy store (13) and a power electronics system (12) having a plurality of switching elements, wherein the switching elements of the power electronics system (12) are actuated for electrically connecting the phases to the energy store (13) in order to produce a generator deceleration torque, **characterized in that** a driving situation of the motor vehicle (1) is determined, wherein, according to the driving situation thus determined, an actuation method is selected from a group of at least two potential actuation methods, and wherein the switching elements are actuated according to the actuation method selected,
wherein a clocking block method is selected as the actuation method, in the event that an emergency braking situation is identified as the driving situation.

2. Method according to one of the preceding claims, **characterized in that** a space vector pulse-width modulation method is selected as the actuation method.

3. Method according to Claim 2, **characterized in that** a space vector pulse-width modulation method is selected, in the event that a standard driving situation is identified as the driving situation.

4. Method according to one of Claims 2 and 3, **characterized in that** a space vector pulse-width modulation method is selected, if the driving situation is identified as downhill travel and/or travel with an at least substantially charged energy store.

5. Method according to one of the preceding claims, **characterized in that**, for the identification of the driving situation, a release speed of an actuator (17) is monitored, by means of which an acceleration torque of the motor vehicle (1) is definable.

6. Method according to one of the preceding claims, **characterized in that**, for the identification of the driving situation, an operating speed and/or an operating force of an actuator (18) is monitored, by means of which the deceleration torque for the motor vehicle (1) is definable.

7. Method according to one of the preceding claims, **characterized in that** the driving situation is determined according to data which are detected by means of an environment sensor system (26) of the motor vehicle (1).

8. Method according to one of the preceding claims, **characterized in that**, for the determination of the driving situation, a state-of-charge of the energy store (13) is monitored.

9. Method according to one of the preceding claims, **characterized in that**, for the determination of the driving situation, a gradient of a road upon which the motor vehicle (1) is travelling is monitored.

10. Device for a motor vehicle which comprises an electrical machine (7) having at least three phases, an electrical energy store (13) and a power electronics system (12) having a plurality of switching elements, wherein the phases of the electrical machine (7) are electrically connected/connectable to the energy store (13) by means of the power electronics system (12), **characterized by** a control apparatus (15), which is specifically designed, in regulation use, to execute the method according to one of Claims 1 to 9.

11. Motor vehicle with an electrical machine (7) having at least three phases, particularly a drive machine (7), an electrical energy store (13) and a power electronics system (12) having a plurality of switching elements, wherein the phases of the electrical machine (7) are electrically connected/connectable to the energy store (13) by means of the power electronics system (12), **characterized by** a device (14) according to Claim 10.

## Revendications

1. Procédé pour faire fonctionner un véhicule automobile comportant une machine électrique (7) à au moins trois phases, un accumulateur d'énergie électrique (13) et une électronique de puissance (12) comportant plusieurs éléments de commutation, les éléments de commutation de l'électronique de puissance (12) étant commandés pour relier électriquement les phases à l'accumulateur d'énergie (13) afin de générer un couple de décélération en mode générateur, **caractérisé en ce qu'**une situation de conduite du véhicule automobile (1) est déterminée, un procédé de commande étant sélectionné dans un groupe d'au moins deux procédés de commande possibles en fonction de la situation de conduite déterminée, et les éléments de commutation étant commandés en fonction du procédé de commande sélectionné,
un procédé de cadencement par bloc étant sélectionnée en tant que procédé de commande s'il est déterminé que la situation de conduite est une situation de freinage d'urgence.

2. Procédé selon l'une quelconque des revendications précédentes, **caractérisé en ce qu'**un procédé de modulation de largeur d'impulsion à vecteur spatial est sélectionné en tant que procédé de commande.

3. Procédé selon la revendication 2, **caractérisé en ce qu'**un procédé de modulation de largeur d'impulsion à vecteur spatial est sélectionné s'il est déterminé que la situation de conduite est une situation de conduite standard.

4. Procédé selon l'une quelconque des revendications 2 ou 3, **caractérisé en ce qu'**un procédé de modulation de largeur d'impulsion à vecteur spatial est sélectionné s'il est déterminé que la situation de conduite est un parcours descendant et/ou un parcours lors duquel l'accumulateur d'énergie est au moins sensiblement chargé.

5. Procédé selon l'une quelconque des revendications précédentes, **caractérisé en ce qu'**une vitesse de déclenchement d'un élément de réglage (17), au moyen duquel un couple d'accélération peut être prédéfini pour le véhicule automobile (1), est surveillée pour déterminer la situation de conduite.

6. Procédé selon l'une quelconque des revendications précédentes, **caractérisé en ce qu'**une vitesse d'actionnement et/ou une force d'actionnement d'un élément de réglage (18), au moyen duquel le couple de décélération peut être prédéfini pour le véhicule automobile (1), sont surveillées pour déterminer la situation de conduite.

7. Procédé selon l'une quelconque des revendications précédentes, **caractérisé en ce que** la situation de conduite est déterminée en fonction de données détectées au moyen d'un système de capteurs d'environnement (26) du véhicule automobile (1).

8. Procédé selon l'une quelconque des revendications précédentes, **caractérisé en ce qu'**un état de charge de l'accumulateur d'énergie (13) est surveillé pour déterminer la situation de conduite.

9. Procédé selon l'une quelconque des revendications précédentes, **caractérisé en ce qu'**une pente d'une route sur laquelle circule le véhicule automobile (1) est surveillée pour déterminer la situation de conduite.

10. Dispositif pour véhicule automobile, comportant une machine électrique (7) à au moins trois phases, un accumulateur d'énergie électrique (13) et une électronique de puissance (12) comportant plusieurs éléments de commutation, les phases de la machine électrique (7) étant/pouvant être reliées électriquement à l'accumulateur d'énergie (13) par l'électronique de puissance (12), **caractérisé par** un dispositif de commande (15). spécialement conçu pour mettre en œuvre le procédé selon l'une quelconque des revendications 1 à 9 lorsqu'il est utilisé tel que prévu.

11. Véhicule automobile comprenant une machine électrique (7) à au moins trois phases, en particulier une machine motrice (7), un accumulateur d'énergie électrique (13) et une électronique de puissance (12) comportant plusieurs éléments de commutation, les phases de la machine électrique (7) étant/pouvant être reliées électriquement à l'accumulateur d'énergie (13) par l'électronique de puissance (12), **caractérisé par** un dispositif (14) selon la revendication 10.
